# EUROPÄISCHE PATENTSCHRIFT

(11) **EP 4 547 971 B1**
(45) Veröffentlichungstag und Bekanntmachung des Hinweises auf die Patenterteilung: **15.04.2026**
(21) Anmeldenummer: 23731695.5
(22) Anmeldetag: 12.06.2023
(51) Int. Cl.: F04D 23/00, F04D 25/06, F04D 29/059, F04D 29/08, F16C 33/78

(54) **SEITENKANALVERDICHTER FÜR EIN BRENNSTOFFZELLENSYSTEM ZUR FÖRDERUNG UND/ODER VERDICHTUNG EINES GASFÖRMIGEN MEDIUMS, BRENNSTOFFZELLENSYSTEM**
SIDE CHANNEL COMPRESSOR FOR A FUEL CELL SYSTEM FOR CONVEYING AND/OR COMPRESSING A GASEOUS MEDIUM, AND FUEL CELL SYSTEM
COMPRESSEUR À CANAL LATÉRAL DE SYSTÈME DE PILE À COMBUSTIBLE POUR LE TRANSPORT ET/OU LA COMPRESSION D'UN MILIEU GAZEUX, ET SYSTÈME DE PILE À COMBUSTIBLE

(30) Priorität: 29.06.2022 DE 102022206578
(43) Veröffentlichungstag der Anmeldung: 07.05.2025
(73) Patentinhaber: Robert Bosch GmbH, 70442 Stuttgart (DE)
(72) Erfinder: WAHR, Gerd, 75392 Deckenpfronn (DE); THULLEN, Carlo, 74199 Untergruppenbach (DE); SCHEPP, Rene, 71336 Waiblingen (DE)
(86) Internationale Anmeldenummer: PCT/EP2023/065648
(87) Internationale Veröffentlichungsnummer: WO 2024/002669

(56) Entgegenhaltungen:
- CN-A- 113 357 170
- DE-A1- 102012 000 757
- US-A1- 2020 149 590

## Beschreibung

Die vorliegende Erfindung betrifft einen Seitenkanalverdichter für ein Brennstoffzellensystem zur Förderung und/oder Verdichtung eines gasförmigen Mediums, insbesondere Wasserstoff, das insbesondere zur Anwendung in Fahrzeugen mit einem Brennstoffzellenantrieb vorgesehen ist. Darüber hinaus betrifft die Erfindung ein Brennstoffzellensystem mit einem erfindungsgemäßen Seitenkanalverdichter.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich, wie bei der Einspritzung von flüssigem Kraftstoff gesteuert, sondern das gasförmige Medium wird aus mindestens einem Hochdrucktank entnommen und über eine Zuströmleitung eines Mitteldruckleitungssystems an eine Ejektoreinheit geleitet. Diese Ejektoreinheit führt das gasförmige Medium über eine Verbindungsleitung eines Niederdruckleitungssystems zu einer Brennstoffzelle. Nachdem das gasförmige Medium durch die Brennstoffzelle geströmt ist, wird es über eine Rückführleitung zurück zur Ejektoreinheit geführt. Dabei kann der Seitenkanalverdichter zwischengeschaltet werden, der die Gasrückführung strömungstechnisch und effizienztechnisch unterstützt. Zudem werden Seitenkanalverdichter zur Unterstützung des Strömungsaufbaus im Brennstoffzellenantrieb eingesetzt, insbesondere bei einem (Kalt)-Start des Fahrzeugs nach einer gewissen Standzeit. Das Antreiben dieser Seitenkanalverdichter erfolgt üblicherweise über Elektromotoren, die beim Betrieb in Fahrzeugen über die Fahrzeugbatterie mit Spannung versorgt werden.

Aus der DE 10 2018 204 713 A1 ist ein Seitenkanalverdichter für ein Brennstoffzellensystem bekannt, bei dem ein gasförmiges Medium, insbesondere Wasserstoff, gefördert und/oder verdichtet wird. Der Seitenkanalverdichter weist dabei ein Gehäuse und einen Antrieb auf, wobei das Gehäuse ein Gehäuse-Oberteil und ein Gehäuse-Unterteil aufweist, mit einem in dem Gehäuse umlaufend um eine Drehachse verlaufenden Verdichterraum, der mindestens einen umlaufenden Seitenkanal aufweist, mit einem in dem Gehäuse befindlichen Verdichterrad, das drehbar um die Drehachse angeordnet ist und durch den Antrieb angetrieben wird. Dabei weist das Verdichterrad an seinem Umfang im Bereich des Verdichterraums angeordnete Schaufelblätter auf und ist mit jeweils einer am Gehäuse ausgebildeten Gas-Einlassöffnung und einer Gas-Auslassöffnung, die über den Verdichterraum, insbesondere den mindestens einen Seitenkanal, fluidisch miteinander verbunden sind, wobei der Seitenkanalverdichter mindestens ein Lager aufweist.

Aus der CN 113 357 170 A ist eine integriertes System der Brennstoffzellen-Wasserstoffschaltung bekannt.

Aus der US 2020/149590 A1 ist ein Wälzlager und eine Lagereinheit für eine Luftturbine und ein Luftturbinenhandstück für zahnärztliche Zwecke bekannt.

Die DE 10 2012 000 757 A1 betrifft ein Wälzlager, insbesondere ein Kugellager, mit einem Dichtungssystem, das einen äußeren Lagerring und einen inneren Lagerring umfasst.

Der aus der DE 10 2018 204 713 A1 bekannte Seitenkanalverdichter kann gewisse Nachteile aufweisen. Bei der Verwendung des Seitenkanalverdichters kann im Betrieb des Seitenkanalverdichters entstehendes Prozeßwasser ein in dem jeweiligen Lager vorhandenes Schmiermedium, insbesondere Lagerfett, aus dem Lager auswaschen und somit aus dem Lager heraustransportieren. Zudem kann aufgrund der hohen Drehzahl der Lager von beispielsweise bis zu 25 000 Umdrehungen pro Minute das Schmiermedium, insbesondere Lagerfett, aufgrund von Beschleunigungskräften aufgrund der Rotation, aus dem Lager getrieben und/oder sich aus dem Lager herausbewegen. Aufgrund dieser Effekte erhöht sich die Ausfallwahrscheinlichkeit des jeweiligen Lagers und somit des gesamten Seitenkanalverdichters, aufgrund von erhöhter Wärmeentwicklung und erhöhtem Verschleiss.

Der aus der DE 10 2018 204 713 A1 bekannte Seitenkanalverdichter kann dabei in einer beispielhaften Ausführungsform Dichtscheiben aufweisen, die sich zwischen dem Lagerinnenring und dem Lageraußenring befinden, um eine Kapselung eines Lagerinnenraums zu bewirken. Dabei können die Dichtscheiben eine Dichtlippe aufweisen, wobei die Dichtlippeinsbesondere ein Elastomer und/oder einen Kunststoff aufweis. Die Dichtlippe kann dabei mittels eines Schleifkontakts eine zumindest teilweise Kapselung des Lagerinnenraums bewirkt. Diese im Stand der Technik dargestellte beispielhafte Ausführungsform des Seitenkanalverdichters weist die Nachteile auf, dass es aufgrund des Reibkontaktes zu einer erhöhten Temperaturentwicklung im Bereich des Schleifkontakts kommt, wodurch das mindestens eine Lager und/oder weitere Bauteile des Seitenkanalverdichters geschädigt werden können. Dabei kann es beispielsweise aufgrund der erhöhten Temperaturen zu einer geringeren Viskosität des Schmiermediums, insbesondere des Lagerfettes, kommen, was wiederum zu einer reduzierten Schmierung führt, was des Weiteren zu erhöhten Temperaturen der Lagerbauteile, aber auch zu einer Beschleunigten Alterung des Schmiermediums, insbesondere des Lagerfettes, führen. Zudem kann es, insbesondere bei hohen Drehzahlen des Seitenkanalverdichters, zu Verschleiß in Form von Materialausbrüchen an der Dichtlippe und/oder dem jeweiligen Lagerring führen, wodurch der Seitenkanalverdichter und/oder andere Bauteile des Brennstoffzellensystems, wie beispielsweise ein Stack, beschädigt werden können. Des Weiteren weist diese im Stand der Technik dargestellte beispielhafte Ausführungsform des Seitenkanalverdichters den Nachteil auf, dass die kapselnde Wirkung mit der Zeit nachlässt und somit Prozesswasser in den Bereich des Lagerinnenraums gelangen kann, wodurch sich die Lebensdauer des jeweiligen Lagers und somit des gesamten Seitenkanalverdichters reduzieren kann. Zudem kann ein erhöhter Energieaufwand des Antriebs notwendig sein, insbesondere in Form von elektrischer Energie, aufgrund der Reibungsverluste des Schleifkontakts, was wiederum zu erhöhten Betriebskosten des Seitenkanalverdichters führt. Außerdem kann eine höhere Reibung eine andere Motorenauslegung notwendig machen, wodurch die Kosten des Seitenkanalverdichters erhöht werden.

### Offenbarung der Erfindung

### Vorteile der Erfindung

Erfindungsgemäß wird ein Seitenkanalverdichter für ein Brennstoffzellensystem zur Förderung und/oder Verdichtung von einem gasförmigen Medium, insbesondere Wasserstoff, mit den Merkmalen der unabhängigen Patentansprüche bereitgestellt. Dabei weist der Seitenkanalverdichter ein Gehäuse und einen Antrieb auf, mit einem in dem Gehäuse umlaufend um eine Drehachse verlaufenden Verdichterraum, der mindestens einen umlaufenden Seitenkanal aufweist, mit einem in dem Gehäuse befindlichen Rotor-Raum und einem in diesem befindlichen Verdichterrad, das drehbar um die Drehachse angeordnet ist. Das Verdichterrad wird durch den Antrieb angetrieben, wobei der Seitenkanalverdichter mindestens ein auf einem zylindrischen Lagerzapfen befindliches Lager aufweist und wobei das jeweilige Lager einen Lageraußenring, einen Lagerinnenring und einen Lagerinnenraum aufweist, der mittels mindestens eines Dichtelements von dem Rotor-Raum gekapselt ist.

Bezugnehmend auf Anspruch 1 weist der Lagerinnenraum, der von dem Rotor-Raum durch das Dichtelement derart kapselbar ist, betriebszustandsabhängig eine entweder schleifende Dichtung oder eine kontaktlose Dichtung zwischen dem Lagerinnenring und dem Dichtelement auf.

Auf diese Weise lässt sich der Vorteil erzielen, dass je nach Betriebszustand des Seitenkanalverdichters eine geeignete Dichtung herstellbar ist. Dabei kann zum einen der Verschleiß des Dichtelements und/oder des Seitenkanalverdichters reduziert werden, indem die kontaktlose Dichtung herstellbar ist. Zudem kann der Wirkungsgrad des Seitenkanalverdichters erhöht werden. Dabei kann eine kompakte Bauform des Dichtelements und des jeweiligen Lagers beibehalten werden. Somit kann die Ausfallwahrscheinlichkeit des Seitenkanalverdichters reduziert werden und/oder die Lebensdauer des Lagers und/oder des Seitenkanalverdichters kann erhöht werden.

Durch die in den Unteransprüchen aufgeführten Maßnahmen sind vorteilhafte Weiterbildungen des im Anspruch 1 angegebenen Seitenkanalverdichters möglich. Die Unteransprüche betreffen bevorzugte Weiterbildungen der Erfindung.

Gemäß einer vorteilhaften Ausgestaltung des erfindungsgemäßen Seitenkanalverdichters sind der Lageraußenring und das Dichtelement derart mit dem Verdichterrad verbunden, dass diese drehbar um die Drehachse gelagert sind, insbesondere im Betrieb des Seitenkanalverdichters, wobei der Lagerinnenring derart fixiert ist, insbesondere verdrehfest auf dem Lagerzapfen, und/oder sich nicht mit dem Verdichterrad mit dreht. Auf diese Weise kann der Vorteil erzielt werden, dass der Bereich des Dichtelements, der eine schleifende Dichtung ausbildet, insbesondere mit dem Lagerinnenring, einen möglichst kleinen Durchmesser und/oder eine möglichst kleine Fläche aufweist. Dies führt zu geringen Verlusten aufgrund der geringeren und/oder reduzierten Oberflächengrößen, die sich im Reibkontakt befinden, wodurch zum einen der Wirkungsgrad des Lagers und/oder des Seitenkanalverdichters verbessert werden kann. Zudem lässt sich aufgrund der erfindungsgemäßen Ausgestaltung des Seitenkanalverdichters der Vorteil erzielen, dass die Wärmeentwicklung durch die Reibpartner der schleifenden Dichtung reduziert werden kann, so dass ein reduzierter Wärmeeintrag in das jeweilige Lager herbeigeführt werden und die Lebensdauer eines Schmiermediums im Lager erhöht werden kann, wodurch die Ausfallwahrscheinlichkeit des Lagers und/oder des Seitenkanalverdichters reduziert werden kann.

Gemäß einer vorteilhaften Weiterbildung des Seitenkanalverdichters weist das jeweilige Dichtelement einen Stahlrücken und eine Dicht-Manschette auf, wobei der Stahlrücken und/oder die Dicht-Manschette jeweils einen, insbesondere zumindest nahezu orthogonal, um die Drehachse umlaufenden scheibenförmigen Bereich und einen gekrümmten Bereich aufweisen. Auf diese Weise kann eine kompakte Bauform des Dichtelements erzielt werden, wobei auf geringem Bauraum die erfindungsgemäße vorteilhafte Ausgestaltung des Dichtelements erzielt werden kann, bei dem eine schleifende Dichtung oder eine kontaktlose Dichtung herstellbar ist.

Gemäß einer besonders vorteilhaften Ausgestaltung des Seitenkanalverdichters weist der Stahlrücken einen nicht elastischen Werkstoff auf, insbesondere einen metallischen Werkstoff. Zudem weist die Dicht-Manschette einen elastischen Werkstoff auf, insbesondere PTFE (Polytetrafluorethylen). Auf diese Weise lässt sich sicherstellen, dass ein effektives Entleeren und/oder Evakuieren der Strömungskammer ermöglicht wird, indem eine Abführung des gasförmigen Mediums aus dem Bereich der Strömungskammer über die der Drehachse abgewandten geöffneten Seite, bei der es sich insbesondere um eine Öffnung handelt, möglich ist. Auf diese Weise kann die Lebensdauer des mindestens einen Lagers und/oder des Seitenkanalverdichters erhöht werden.

Gemäß einer vorteilhaften Ausbildung des Seitenkanalverdichters weist das Dichtelement ein zumindest teilweise FKM (Fluorkautschuk) und/oder EPDM (Ethylen-Propylen-Dien-(Monomer)-Kautschuk) aufweisendes Elastomer-Element auf, wobei die umgeformte Dicht-Manschette mittels des Elastomer-Elements formschlüssig und/oder kraftschlüssig und/oder zumindest teilweise stoffschlüssig mit dem Stahlrücken zumindest im scheibenförmig verlaufenden Bereich verbunden ist. Auf diese Weise kann eine stabile und nachhaltige Verbindung zwischen dem Stahlrücken und der Dicht-Manschette hergestellt werden. Somit kann eine Ausfallwahrscheinlichkeit der Dicht-Manschette und/oder des Dichtelements und/oder des Stahlrückens verringert werden, insbesondere bei einem wirkmechanischen Zusammenspiel der Komponenten, so dass die Lebensdauer des Seitenkanalverdichters erhöht und/oder verbessert werden kann.

Gemäß einer vorteilhaften Weiterbildung des Seitenkanalverdichters ist das Dichtelement derart ausgeführt, dass die Dicht-Manschette in einer ersten Stellung, insbesondere bei einem Stillstand des Seitenkanalverdichters, mit dem Lagerinnenring derart in Kontakt steht, dass sich ein Kontakt zwischen dem Lagerinnenring und der Dicht-Manschette ausbildet und/oder die Dicht-Manschette mit einer ersten Anlagefläche nicht mit einer zweiten Anlagefläche des Stahlrückens in Anlage steht, insbesondere im gekrümmten Bereich. Auf diese Weise lässt sich der Vorteil erzielen, dass eine nachhaltige Kapselung des Lagerinnenraums, insbesondere vom Rotor-Raum, erzielt werden kann. Dabei befindet sich das Dichtelement, insbesondere mittels der Dicht-Manschette mit dem Lageraußenring und dem Lagerinnenring in Kontakt, so dass eine vollständige Kapselung des Lagerinnenraums herbeigeführt werden kann. Dies gilt beispielsweise bei einem sich nicht im Betrieb befindlichen Seitenkanalverdichter, bei dem sich das jeweilige Lager und/oder der Lageraußenring nicht in einer Rotationsbewegung befinden, so dass keine Fliehkräfte auf ein Schmiermedium im Lagerinnenraum einwirken, bei dem es sich insbesondere um ein Lagerfett handelt. Somit wird sichergestellt, dass mittels der zumindest nahezu vollständigen Kapselung des Lagerinnenraums und des Schmiermediums durch das Dichtelement, dieses Schmiermedium nicht aus dem Lager herausgelangt, wo es in den Rotor-Raum und/oder den Verdichterraum gelangen könnte, was zum einen zu einer möglichen Schädigung der Wasserstoff führenden Leitungen und/oder eines Stacks führen könnte. Zum anderen würde ein Verlust des Schmiermediums im Lager zu einer verkürzten Lebensdauer eines Wälzkörpers und/oder einer Lagerlaufbahn führen, wodurch die Ausfallwahrscheinlichkeit des Lagers erhöht wird. Aufgrund der erfindungsgemäßen Ausgestaltung des Lagers und des Seitenkanalverdichters verbleibt das Schmiermedium im Lagerinnenraum, wodurch sich die Ausfallwahrscheinlichkeit des Lagers reduzieren lässt.

Gemäß einer besonders vorteilhaften Weiterbildung des Seitenkanalverdichters ist die Dicht-Manschette im gekrümmten Bereich derart verformbar, dass diese sich, insbesondere im Betrieb des Seitenkanalverdichters, mittels einer auf diese wirkenden resultierenden Kraft, die unter anderem eine Zentrifugalkraft aufweist, und/oder Druckkraft derart vom Lagerinnenring wegbewegt, so dass die Dicht-Manschette mit ihrer ersten Anlagefläche mit der zweiten Anlagefläche des Stahlrückens in Kontakt steht. Auf diese Weise lässt sich der Vorteil erzielen, dass bei einem Betrieb des Seitenkanalverdichters, bei dem insbesondere hohe Drehzahlen von zumindest nahezu 18 000 bis 25 000 Umdrehungen pro Minute auftreten können, die schleifende Dichtung aufgehoben wird und eine kontaktlose Dichtung hergestellt wird. Dabei verformt sich die Dicht-Manschette im gekrümmten Bereich derart, dass diese sich im Bereich des Kontaktpunkts vom Lagerinnenring löst und in Richtung des gekrümmten Bereichs des Stahlrückens bewegt, insbesondere in Richtung der zweiten Anlagefläche des Stahlrückens. Dabei wird das Schmiermedium aufgrund der Zentrifugalkräfte nach außen in Richtung Lageraußenring gedrückt, wobei das Schmiermedium im Bereich des scheibenförmig verlaufenden Bereichs mit dem Dichtelement in Berührung kommt. Eine Kapselung und ein Austreten des Schmiermediums vom Lagerinnenraum in den Rotor-Raum wird somit durch das Dichtelement, insbesondere die Dicht-Manschette und/oder den Stahlrücken verhindert. Auf diese Weise lässt sich die Lebensdauer des Seitenkanalverdichters erhöhen, indem zum einen die schleifende Dichtung durch eine kontaktlose Dichtung ersetzt wird, die weniger Verschleiß am Dichtelement und/oder der Dicht-Manschette verursacht, wodurch die Lebensdauer des Dichtelements und/oder des Lagers erhöht werden kann, da sich eine reibungsfreie Dichtung ausbildet. Zum anderen lässt sich der Wirkungsgrad der Lager und/oder des Seitenkanalverdichters verbessern.

Gemäß einer vorteilhaften Ausgestaltung des Seitenkanalverdichters ist das Dichtelement derart ausgeführt, dass die Dicht-Manschette in einer zweiten Stellung, insbesondere im Betrieb des Seitenkanalverdichters, nicht mit dem Lagerinnenring in Kontakt steht, so dass sich ein Spalt zwischen dem Lagerinnenring und der Dicht-Manschette ausbildet. Auf diese Weise lässt sich der Vorteil erzielen, dass eine Dichtfunktion zwischen der Dichtscheibe und dem Lagerinnenring erzielt werden kann, die zumindest nahezu reibungsfrei ist, im Gegensatz zum Stand der Technik, bei dem es sich insbesondere um eine Lösung handelt, bei dem sich eine an der Dichtscheibe befindliche Dichtlippe im Schleifkontakt mit dem Lagerinnenring befindet. Diese reibungsfreie Kapselung des Lagerinnenraums kann mittels eines nicht-in-Kontakt-stehens des Dichtelements, insbesondere der Dicht-Manschette und des Lagerinnenrings, bei dem sich der Spalt zwischen dem Lagerinnenring und der Dicht-Manschette ausbildet, realisiert werden. Dabei wird eine Erzeugung von Reibungshitze im Betrieb des Seitenkanalverdichters verhindert und somit wird eine Beschädigung und/oder ein Verschleiß von umliegenden Bauteilen verhindert oder zumindest verringert, wodurch die Lebensdauer des gesamten Seitenkanalverdichters erhöht wird. Zudem kann mittels des Spalts ein Reibkontakt zwischen der Dicht-Manschette und dem Lagerinnenring verhindert werden, während das Spaltmaß so gering ist, dass zumindest nahezu kein Schmiermedium aufgrund der Materialbeschaffenheit durch diesen Spalt vom Lagerinnenraum in den Rotor-Raum hindurchwandern und/oder sich hindurchbewegen kann. Zudem wird das Schmiermedium, bei dem es sich insbesondere um Lagerfett handelt, aufgrund der Fliehkräfte nach außen in Richtung Außenring gedrückt, wodurch zumindest nahezu das gesamte Schmiermedium vom sich ausbildenden Spalt weggeleitet wird. Damit wird verhindert, dass das Schmiermedium aus dem Lagerinnenraum herausgelangt und somit der Schmiereffekt vermindert wird. Somit lässt sich die Ausfallwahrscheinlichkeit des Lagers und somit des Seitenkanalverdichters mittel der erfindungsgemäßen Ausgestaltung des Seitenkanalverdichters reduzieren, während die Lebensdauer der vorhergehend genannten Komponenten erhöht werden kann. Des Weiteren lassen sich Reibungsverluste aufgrund eines Schleifkontaktes und der damit einhergehenden Reibung verhindern, wodurch sich der Wirkungsgrad des Seitenkanalverdichters erhöhen lässt.

Gemäß einer vorteilhaften Ausbildung des Seitenkanalverdichters weist das Gehäuse-Unterteil den zylindrischen Lagerzapfen auf, wobei der Lagerzapfen derart in Richtung der Drehachse verläuft, dass seine Mantelfläche umlaufend um die Drehachse verläuft und wobei ein erstes Lager und/oder ein zweites Lager radial zur Drehachse mit der Mantelfläche des Lagerzapfens in Kontakt stehen. Auf diese Weise kann eine Aufnahme des ersten und/oder des zweiten Lagers mittels einer kompakten und kostengünstigen Bauform des Gehäuses und/oder des Seitenkanalverdichters realisiert werden. Zudem kann die Montage der Lager und/oder des Verdichterrads im Gehäuse vereinfacht werden, so dass weniger Montageschritte notwendig sind und somit Montagekosten eingespart werden können.

Gemäß einer vorteilhaften Ausgestaltung des Seitenkanalverdichters ist der Antrieb als ein Axialfeld-Elektromotor ausgeführt, der einen Stator und einen Rotor aufweist. Dabei sind der Stator und der Rotor scheibenförmig umlaufend um die Drehachse ausgebildet und der Stator ist in Richtung der Drehachse neben dem Rotor angeordnet. Auf diese Weise lässt sich der Vorteil erzielen, dass der Antrieb als eine in Richtung der Drehachse schmalere Komponente, insbesondere im Vergleich zu einem aus dem Stand der Technik bekannten Antrieb mit einer Antriebswelle, umgesetzt werden kann, die aufgrund Ihres Durchmessers zwar viel Bauraum radial zur Drehachse benötigt, jedoch axial zur Drehachse schmal ausgeführt ist und somit axial zur Drehachse wenig Bauraum benötigt. Die weiteren Komponenten des Seitenkanalverdichters, insbesondere das Gehäuse und das Verdichterrad, sind gleichartig als in Richtung der Drehachse schmale Komponenten umgesetzt, die aufgrund Ihrer Durchmesser zwar viel Bauraum radial zur Drehachse benötigen, jedoch axial zur Drehachse schmal ausgeführt sind und somit axial zur Drehachse wenig Bauraum benötigen. Dies ist zudem vorteilhaft bei der Integration des Seitenkanalverdichters in einer Anodenplatte einer Brennstoffzelle. Bei einer Kombination des Antriebs mit den weiteren Komponenten des Seitenkanalverdichters, insbesondere dem Gehäuse und dem Verdichterrad, werden somit Komponenten mit gleichartiger Bauraumausprägungen kombiniert, wodurch sich eine kompakte und platzsparende Bauweise des gesamten Seitenkanalverdichters erzielen lässt. Dabei lässt sich die kompakte und platzsparende Bauweise des Seitenkanalverdichters durch eine möglichst geringe Oberfläche im Verhältnis zum Volumen realisieren. Dies bietet den Vorteil, dass nur ein geringer Einbauraum beim Kunden benötigt wird, beispielsweise in einem Gesamt-Fahrzeug. Des Weiteren bietet die kompakte Bauweise des Seitenkanalverdichters, insbesondere mit einer möglichst geringen Oberfläche im Verhältnis zum Volumen, thermische Vorteile bei einem Kaltstart des Seitenkanalverdichters.

Die Erfindung ist nicht auf die hier beschriebenen Ausführungsbeispiele und die darin hervorgehobenen Aspekte beschränkt. Die Erfindung ist ausschließlich durch den Schutzbereich der beigefügten Ansprüche begrenzt.

### Kurze Beschreibung der Zeichnung

Anhand der Zeichnung wird die Erfindung nachstehend eingehender beschrieben.

### Kurze Beschreibung der Zeichnung

Anhand der Zeichnung wird die Erfindung nachstehend eingehender beschrieben.

Es zeigt:
- Figur 1: eine schematische Schnittansicht eines erfindungsgemäßen Seitenkanalverdichters,
- Figur 2: eine schematische Schnittansicht eines Lagers gemäß dem Stand der Technik,
- Figur 3: eine schematische Schnittansicht eines erfindungsgemäßen Lagers und/oder eines Dichtelements gemäß einem ersten Ausführungsbeispiel
- Figur 4: eine schematische Schnittansicht eines erfindungsgemäßen Lagers und/oder Dichtelements gemäß einem zweiten Ausführungsbeispiel
- Figur 5: eine schematische Schnittansicht des Dichtelements mit einem Stahlrücken, einem Elastomer-Element und einer Dicht-Manschette in einer ersten Stellung
- Figur 6: eine schematische Schnittansicht des Dichtelements mit dem Stahlrücken, dem Elastomer-Element und der Dicht-Manschette in einer zweiten Stellung

### Beschreibung des Ausführungsbeispiels

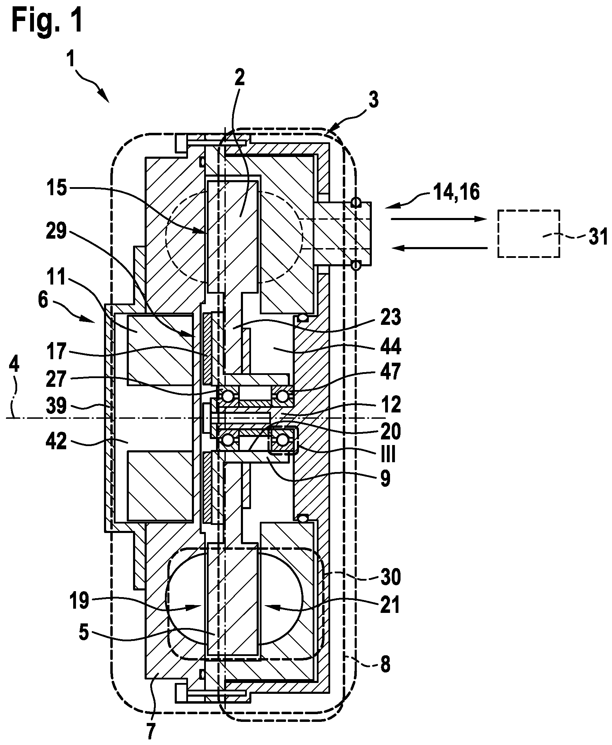

Der Darstellung gemäß **Fig.** 1 ist eine schematische Schnittansicht eines erfindungsgemäßen Seitenkanalverdichters 1 zu entnehmen.

Dabei ist in **Fig.** 1 gezeigt, dass der Seitenkanalverdichter 1 für ein Brennstoffzellensystem 31 zur Förderung und/oder Verdichtung eines gasförmigen Mediums, insbesondere Wasserstoff, mit einem Gehäuse 3 und einem Antrieb 6 versehen ist, wobei das Gehäuse 3 ein Gehäuse-Oberteil 7 und ein Gehäuse-Unterteil 8 aufweist. Zudem weist das Gehäuse 3 einen umlaufend um eine Drehachse 4 verlaufenden Verdichterraum 30 auf, der mindestens einen umlaufenden Seitenkanal 19, 21 aufweist, mit einem in dem Gehäuse 3 befindlichen Verdichterrad 2, das drehbar um die Drehachse 4 angeordnet ist und durch den Antrieb 6 angetrieben wird, wobei das Verdichterrad 2 an seinem Umfang im Bereich des Verdichterraums 30 angeordnete Schaufelblätter 5 aufweist und mit jeweils einer am Gehäuse 3 ausgebildeten Gas-Einlassöffnung 14 und einer Gas-Auslassöffnung 16, die über den Verdichterraum 30, insbesondere den mindestens einen Seitenkanal 19, 21, fluidisch miteinander verbunden sind, wobei der Seitenkanalverdichter 1 mindestens ein Lager 27, 47 aufweist. Der mindestens eine Seitenkanal 19, 21 kann dabei zumindest in einem Teilbereich des Gehäuses 3 umlaufend um die Drehachse 4 verlaufen, wobei in dem Teilbereich, in dem der mindestens eine Seitenkanal 19, 21 im Gehäuse 3 nicht ausgebildet ist, ein Unterbrecher-Bereich 15 im Gehäuse 3 ausgebildet ist.

Zudem ist in **Fig.** 1 gezeigt, dass der Antrieb 6 als ein Axialfeld-Elektromotor 6 ausgeführt ist, der einen Stator 11 und einen Rotor 17 aufweist, wobei der Stator 11 und der Rotor 17 scheibenförmig umlaufend um die Drehachse 4 ausgebildet sind und wobei der Stator 11 in Richtung der Drehachse 4 neben dem Rotor 17 angeordnet ist. Dabei kann sich der Rotor 17 zumindest mittelbar an einer Nabenscheibe 23 des Verdichterrads 2 befinden. Zudem ist in **Fig.** 1 gezeigt, dass der Seitenkanalverdichter 1 einen Stator-Raum 42 und einem Rotor-Raum 44 aufweist, wobei in diesen Räumen 42, 44 zumindest teilweise Bauteile des Antriebs 6 angeordnet sind. Dabei weist das Gehäuse-Oberteil 7 eine durchgehende Wandung 29 auf, die sich zwischen dem Stator-Raum 42 und dem Rotor-Raum 44 befindet und eine fluidische Trennung dieser bewirkt. Der Stator-Raum 42 ist zudem von einem Statorgehäuse 39 zumindest teilweise umgeben und/oder gekapselt. Dabei weist das Gehäuse-Unterteil 8 einen zylindrischen Lagerzapfen 12 auf, wobei der Lagerzapfen 12 derart in Richtung der Drehachse 4 verläuft, dass seine Mantelfläche umlaufend um die Drehachse 4 verläuft und wobei ein erstes Lager 27 und/oder ein zweites Lager 47 radial zur Drehachse 4 mit der Mantelfläche des Lagerzapfens 12 in Kontakt stehen. Zudem kann das Verdichterrad 2 über die Nabenscheibe 23 und eine Nabe 9 mit dem jeweiligen Lager 27, 47 verbunden. Dabei kann der Antrieb 6 als ein Axialfeld-Elektromotor 6 ausgeführt sein, der einen Stator 11 und den Rotor 17 aufweist, wobei der Stator 11 und der Rotor 17 scheibenförmig umlaufend um die Drehachse 4 ausgebildet sind und wobei der Stator 11 in Richtung der Drehachse 4 neben dem Rotor 17 angeordnet ist. Zudem weist der Seitenkanalverdichter 1 den zylindrischen Lagerzapfen 12 auf, wobei der Lagerzapfen 12 derart in Richtung der Drehachse 4 verläuft, dass seine Mantelfläche umlaufend um die Drehachse 4 verläuft. Dabei stehen das erste Lager 27 und/oder das zweite Lager 47 radial zur Drehachse 4 mit der Mantelfläche des Lagerzapfens 12 in Kontakt.

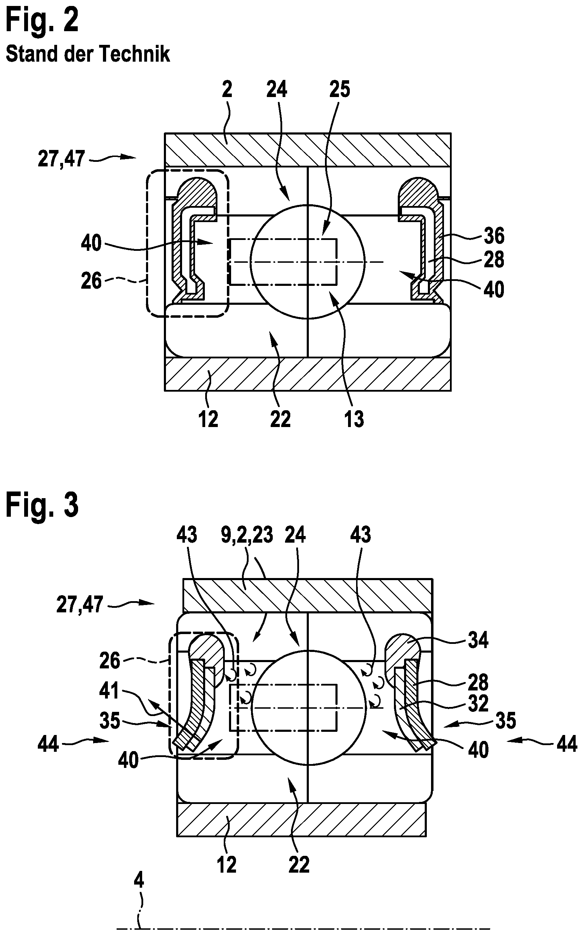

**Fig. 2** zeigt eine schematische Schnittansicht eines Lagers gemäß dem Stand der Technik. Dabei ist gezeigt, dass das mindestens eine Lager 27, 47 einen Lagerinnenring 22, einen Lageraußenring 24 und einen Lagerkäfig 25 und/oder einen Wälzkörper 13 aufweist, die sich zwischen dem Lagerinnenring 22 und dem Lageraußenring 24 befinden. Zudem befinden sich im Bereich der Stirnseiten des Lagerinnenring 22 und des Lageraußenrings 24 jeweils ein Lagerinnenraum 40 kapselndes und/oder begrenzendes Dichtelement 26. Dieses Dichtelement 26 weist in der Regel eine Dichtlippe 36 auf, die mit einem Stahlrücken 28 verbunden ist, beispielsweise indem es an diesen vulkanisiert ist. Das Dichtelement 26 wird dann in eine Art Nut im Lageraußenring 24 eingeclipst. Das Dichtelement 26 funktioniert dann wie ein gängiger Radialwellendichtring. Es dichtet gegen den Lagerinnenring 22 ab.

Zudem wird in **Fig.** 2 gezeigt, dass der Lageraußenring 24 zumindest mittelbar an dem Verdichterrad 2 fixiert ist und mit diesem im Betrieb des Seitenkanalverdichters 1 mit dreht. Dabei ist das Dichtelement 26 am Lageraußenring 24 fixiert, insbesondere formschlüssig und/oder stoffschlüssig und/oder kraftschlüssig, und dreht sich in einer Drehrichtung mit dem Lageraußenring 24 mit, wobei das Dichtelement 26 an seinem Innendurchmesser eine Dichtlippe 36 aufweist, wobei mittels dieser Dichtlippe 36 eine zumindest teilweise Kapselung des Lagerinnenraums 40 erzielt wird. Die Dichtlippe 36 steht dabei in Reibkontakt mit dem Lagerinnenring 22, so dass es sich um eine schleifende Dichtlippe 36 handelt.

Das in **Fig.** 2 gezeigte Lager 27, 47 und/oder Dichtelement 26, kann gewisse Nachteile aufweisen, wobei die gezeigte Dichtlippe 36 durch das sich im Rotor-Raum 44 befindliche gasförmige Medium, das zumindest teilweise Heißwasserdampf aufweisen kann, insbesondere mit einer Temperatur von mehr als 90° C, geschädigt wird. Dabei zeigen insbesondere Elastomere 36 aus FKM (Fluorkautschuk) eine hohe Schädigungsanfälligkeit, wodurch sich die Lebensdauer des Dichtelements 26 verringert und somit die Ausfallwahrscheinlichkeit des Lagers 27, 47 und/oder des Seitenkanalverdichters 1 erhöht. Zudem kann das Elastomer aufquellen und/oder es ist ein deutlicher Verlust der Kontaktpressung und/oder der Dichtwirkung zwischen dem Dichtelement 26 und/oder dem Lagerinnenring 22 zu erwarten.

**Fig.** 3 zeigt eine schematische Schnittansicht eines erfindungsgemäßen Lagers 27, 47 und/oder Dichtelements 26 gemäß einem ersten Ausführungsbeispiel. Dabei weist das jeweilige Lager 27, 47 den Lageraußenring 24, den Lagerinnenring 22 und den Lagerinnenraum 40 auf, der mittels mindestens eines Dichtelements 26 von dem Rotor-Raum 44 gekapselt ist. Dabei ist der Lagerinnenraum 40 von dem Rotor-Raum 44 durch das Dichtelement 26 derart kapselbar, dass betriebszustandsabhängig vom Seitenkanalverdichter 1 entweder eine schleifende Dichtung oder eine kontaktlose Dichtung zwischen dem Lagerinnenring 22 und dem Dichtelement 26 herstellbar ist. Dabei weist das mindestens eine Lager 27, 47 einen Lagerinnenring 22, der in der Regel fest mit dem Lagerzapfen 12 verbunden und somit stehend ist, wobei der Lagerinnenring formschlüssig mit dem Lagerzapfen 12 verbunden ist. Hierbei handelt es sich in der Regel um einen axial zur Drehachse verlaufenden Formschluss und/oder Reibschluss, der aufgrund einer Federvorspannung und/oder die Anziehungskraft durch den Magnetrotor und Stator auf die Lager 27, 47, insbesondere den Lagerinnenring 22, aufgebracht wird. Der Lagerzapfen 12 ist dabei Teil des Gehäuses 3 und nicht drehbar. Der Lageraußenring 24 ist fest mit der Nabe 9 und/oder dem Verdichterrad 2 und/oder der Nabenscheibe 23 verbunden und dreht sich somit im Betrieb des Seitenkanalverdichters 1 mit dem Verdichterrad 2 zumindest mittelbar mit. Dabei ist der Lageraußenring 24 und das Dichtelement 26 derart mit dem Verdichterrad 2 verbunden, dass diese drehbar um die Drehachse 4 sind, insbesondere im Betrieb des Seitenkanalverdichters 1, wobei der Lagerinnenring 22 derart fixiert ist, insbesondere verdrehfest auf dem Lagerzapfen 12, und/oder sich nicht mit dem Verdichterrad 2 mit dreht. Das Dichtelement 26 und/oder der Stahlrücken 28 und/oder die Dicht-Manschette 32 weisen jedoch auf ihrer, der Drehachse 4 zugewandten Seite, einen gekrümmten Bereich 35 auf, der nicht mehr zumindest annähernd orthogonal zur Drehachse 4 verläuft, sondern der eine von dem 40 wegweisende Krümmung aufweist und/oder im Endbereich vom Lagerinnenraum 40 weggerichtet ist.

**Fig.** 3 zeigt zudem, dass das Dichtelement 26 den Stahlrücken 28, eine Dicht-Manschette 32 und ein Elastomer-Element 34 aufweist. Der Stahlrücken 28 und die Dicht-Manschette 32 können über das Elastomer-Element 34 miteinander verbunden sein und/oder der Stahlrücken 28 und die Dicht-Manschette 32 können über das Elastomer-Element 34 mit dem Lageraußenring 24 formschlüssig und/oder kraftschlüssig und/oder formschlüssig verbunden sein, wobei das Elastomer-Element 34 in eine Nut des Lageraußenrings 24 eingelassen ist. Im Stillstand oder bei niedrigen Drehzahlen des Seitenkanalverdichters 1 und/oder des Verdichterrads 2, insbesondere im Bereich von 100 Umdrehungen pro Minute, befindet sich die Dicht-Manschette 32 mit dem Lagerinnenring 22 in Reibkontakt und/oder Schleifkontakt und/oder in Anlage. Sobald die Drehzahl weiter ansteigt, wandert zum einen das Schmiermedium 43 im Innenraum 40 des Lagers 27, 47 vom Lagerinnenring 22 weg hin zum Lageraußenring 24 aufgrund der Zentrifugalkräfte, da es sich zumindest zum Teil mit dem Lageraußenring 24 mit dreht. Zum anderen bewegt sich die Dicht-Manschette 32 vom Lagerinnenring 22 weg hin zum Lageraußenring 24 und/oder zum Stahlrücken 28 in Richtung einer resultierenden Kraft 41, die unter anderem eine Zentrifugalkraft aufweist. Dabei verliert die Dicht-Manschette 32 einen direkten Kontakt, insbesondere einen Reibkontakt und/oder Schleifkontakt mit dem Lagerinnenring 22 und/oder steht mit diesem nicht mehr in Anlage. Somit bildet sich eine kontaktlose Dichtung zwischen dem Lagerinnenring 22 und dem Dichtelement 26 aus. Das Schmiermedium 43 kann nicht zwischen dem Lagerinnenring 22 und der Dicht-Manschette 32 parallel zur Drehachse 4 hindurchgelangen in den Rotor-Raum 44, da es sich ja vom Lagerinnenring 22 zumindest annähernd orthogonal zur Drehachse 4 wegbewegt hat. Somit kann sichergestellt werden, dass über die Lebensdauer des Seitenkanalverdichters 1 kein Schmiermedium 43 an ein Anodengas, insbesondere im Verdichterraum 30 und/oder im Rotor-Raum 44, abgegeben wird und/oder dass das Schmiermedium 43 im jeweiligen Lager 27, 47 verbleibt.

Das in **Fig.** 3 gezeigte jeweilige Dichtelement 26 weist zudem eine hohe Materialbeständigkeit gegenüber dem zu fördernden gasförmigen Medium auf, insbesondere gegenüber dem im Stand der Technik beschriebenen Dichtelement 26. Dabei besteht die Dicht-Manschette 32 aus PTFE (Polytetrafluorethylen) was eine hohe Temperaturbeständigkeit aufweist. Somit kann die Lebensdauer der Dicht-Manschette 32 und/oder des Dichtelements 26 und/oder des Lagers 27, 47 und/oder des Seitenkanalverdichters 1 erhöht werden. Ein weiterer Vorteil der kontaktlosen Dichtung aufgrund der erfindungsgemäßen Ausgestaltung des jeweiligen Lagers 27, 47 und/oder Dichtelements 26 gemäß dem ersten Ausführungsbeispiel ist, dass der mechanische Wirkungsgrad des Seitenkanalverdichters 1 erhöht werden kann, da die Reibungsverluste und Wärmeverluste einer schleifenden Dichtung vermieden und/oder reduziert werden. Dies führt bei einer gleichbleibenden elektrischen Leistung zu höheren darstellbaren Volumenströme des Seitenkanalverdichters 1.

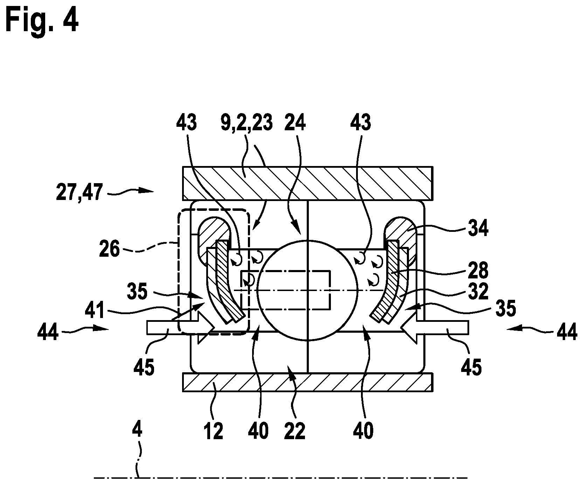

**Fig.** 4 zeigt eine schematische Schnittansicht eines erfindungsgemäßen Lagers 27, 47 und/oder Dichtelements 26 gemäß einem zweiten Ausführungsbeispiel. Dabei ist gezeigt, dass das Lager 27, 47 weitestgehend die gleichen Bauteile aufweist, wie das erfindungsgemäßen Lager 27, 47 und/oder Dichtelement 26 gemäß einem ersten Ausführungsbeispiel. Dabei weisen das Dichtelement 26 und/oder der Stahlrücken 28 und/oder die Dicht-Manschette 32 auf ihrer der Drehachse 4 zugewandten Seite den gekrümmten Bereich 35 auf, der nicht mehr zumindest annähernd orthogonal zur Drehachse 4 verläuft, sondern der eine zum Lagerinnenraum 40 hinweisende Krümmung aufweist und/oder im Endbereich zum Lagerinnenraum 40 hin ausgerichtet ist und/oder in diesen Lagerinnenraum 40 hineinragt. Dabei verliert die Dicht-Manschette 32 einen direkten Kontakt, insbesondere einen Reibkontakt und/oder Schleifkontakt mit dem Lagerinnenring 22 entweder aufgrund einer resultierenden Kraft 41, die unter anderem eine Zentrifugalkraft aufweist, und/oder eine Überdruckkraft 45 aus dem Rotor-Raum 44, wobei die Dicht-Manschette 32 durch die Überdruckkraft 45 in Richtung Stahlrücken 28 gedrückt wird.

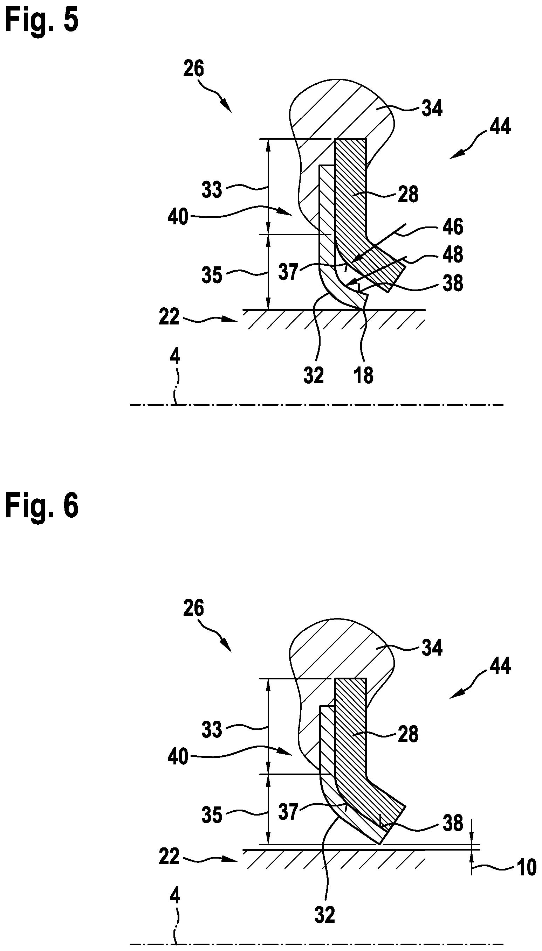

**Fig.** 5 zeigt eine schematische Schnittansicht des Dichtelements 26 mit dem Stahlrücken 28, dem Elastomer-Element 34 und der Dicht-Manschette 32 in einer ersten Stellung. Dabei weist das jeweilige Dichtelement 26 den Stahlrücken 28 und die Dicht-Manschette 32 auf, wobei der Stahlrücken 28 und/oder die Dicht-Manschette 32 jeweils einen, insbesondere zumindest nahezu orthogonal, um die Drehachse 4 umlaufenden scheibenförmigen Bereich 33 und den gekrümmten Bereich 35 aufweisen. Dabei weist der Stahlrücken 28 einen nicht elastischen Werkstoff auf, insbesondere einen metallischen Werkstoff, und die Dicht-Manschette 32 weist einen elastischen Werkstoff auf, insbesondere PTFE (Polytetrafluorethylen). Zudem weist das Dichtelement 26 das Elastomer-Element 34 auf, das wiederum zumindest teilweise FKM (Fluorkautschuk) aufweist, wobei die umgeformte Dicht-Manschette 32 mittels des Elastomer-Elements 34 formschlüssig und/oder kraftschlüssig und/oder zumindest teilweise stoffschlüssig mit dem Stahlrücken 28 zumindest im scheibenförmig verlaufenden Bereich 33 verbunden ist.

Wie in **Fig.** 5 gezeigt ist das Dichtelement 26 derart ausgeführt, dass die Dicht-Manschette 32 in einer ersten Stellung, insbesondere bei einem Stillstand des Seitenkanalverdichters 1, mit dem Lagerinnenring 22 derart in Kontakt steht, dass sich ein Kontaktpunkt 18 zwischen dem Lagerinnenring 22 und der Dicht-Manschette 32 ausbildet und/oder die Dicht-Manschette 32 mit einer ersten Anlagefläche 37, nicht aber mit einer zweiten Anlagefläche 38 des Stahlrückens 28 in Anlage steht, insbesondere im gekrümmten Bereich 35. Somit kann eine zumindest nahezu vollständige Kapselung des Lagerinnenraums 40 erzielt werden. Dabei weist der Stahlrücken 28 im gekrümmten Bereich 35 einen ersten Radius 46 auf und die Dicht-Manschette 32 weist in ihrem im gekrümmten Bereich 35 einen zweiten Radius 48 auf.

**Fig.** 6 zeigt eine schematische Schnittansicht des Dichtelements 26 mit dem Stahlrücken 28, dem Elastomer-Element 34 und der Dicht-Manschette 32 in einer zweiten Stellung. Dabei ist die Dicht-Manschette 32 im gekrümmten Bereich 35 derart verformbar, dass diese sich, insbesondere im Betrieb des Seitenkanalverdichters 1, mittels der auf diese wirkenden resultierenden Kraft 41, die unter anderem eine Zentrifugalkraft aufweist, und/oder Druckkraft 45 derart vom Lagerinnenring 22 wegbewegt, so dass die Dicht-Manschette 32 mit ihrer ersten Anlagefläche 37 mit der zweiten Anlagefläche 38 des Stahlrückens 28 in Kontakt kommt und/oder mit diesem in Kontakt steht. Die Zentrifugalkraft kann dabei radial nach außen wirken. Dabei ist das Dichtelement 26 derart ausgeführt, dass die Dicht-Manschette 32 in einer zweiten Stellung, insbesondere im Betrieb des Seitenkanalverdichters 1, nicht mit dem Lagerinnenring 22 in Kontakt steht, so dass sich ein Spalt 10 zwischen dem Lagerinnenring 22 und der Dicht-Manschette 32 ausbildet.

## Patentansprüche

1. Seitenkanalverdichter (1) für ein Brennstoffzellensystem (31) zur Förderung und/oder Verdichtung eines gasförmigen Mediums, insbesondere Wasserstoff, mit einem Gehäuse (3) und einem Antrieb (6), mit einem in dem Gehäuse (3) umlaufend um eine Drehachse (4) verlaufenden Verdichterraum (30), der mindestens einen umlaufenden Seitenkanal (19, 21) aufweist, mit einem in dem Gehäuse (3) befindlichen Rotor-Raum (44) und einem in diesem befindlichen Verdichterrad (2), das drehbar um die Drehachse (4) angeordnet ist und durch den Antrieb (6) angetrieben wird, wobei der Seitenkanalverdichter (1) mindestens ein auf einem zylindrischen Lagerzapfen (12) befindliches Lager (27, 47) aufweist und wobei das jeweilige Lager (27, 47) einen Lageraußenring (24), einen Lagerinnenring (22) und einen Lagerinnenraum (40) aufweist, der mittels mindestens eines Dichtelements (26) von dem Rotor-Raum (44) gekapselt ist, **dadurch gekennzeichnet, dass** der Lagerinnenraum (40) von dem Rotor-Raum (44) durch das Dichtelement (26) derart kapselbar ist, dass betriebszustandsabhängig vom Seitenkanalverdichter (1) entweder eine schleifende Dichtung oder eine kontaktlose Dichtung zwischen dem Lagerinnenring (22) und dem Dichtelement (26) herstellbar ist.

2. Seitenkanalverdichter (1) gemäß Anspruch 1, **dadurch gekennzeichnet, dass** der Lageraußenring (24) und das Dichtelement (26) derart mit dem Verdichterrad (2) verbunden sind, dass diese drehbar um die Drehachse (4) sind, insbesondere im Betrieb des Seitenkanalverdichters (1), wobei der Lagerinnenring (22) derart fixiert ist, insbesondere verdrehfest auf dem Lagerzapfen (12), und/oder sich nicht mit dem Verdichterrad (2) mit dreht.

3. Seitenkanalverdichter (1) gemäß Anspruch 1 oder 2, **dadurch gekennzeichnet, dass** das jeweilige Dichtelement (26) einen Stahlrücken (28) und eine Dicht-Manschette (32) aufweist, wobei der Stahlrücken (28) und/oder die Dicht-Manschette (32) jeweils einen, insbesondere zumindest nahezu orthogonal, um die Drehachse (4) umlaufenden scheibenförmigen Bereich (33) und einen gekrümmten Bereich (35) aufweisen.

4. Seitenkanalverdichter (1) gemäß Anspruch 3, **dadurch gekennzeichnet, dass** der Stahlrücken (28) einen nicht elastischen Werkstoff aufweist, insbesondere einen metallischen Werkstoff, und die Dicht-Manschette (32) einen elastischen Werkstoff aufweist, insbesondere PTFE (Polytetrafluorethylen).

5. Seitenkanalverdichter (1) gemäß Anspruch 3 oder 4, **dadurch gekennzeichnet, dass** das Dichtelement (26) ein zumindest teilweise FKM (Fluorkautschuk) aufweisendes Elastomer-Element (34) aufweist, wobei die umgeformte Dicht-Manschette (32) mittels des Elastomer-Elements (34) formschlüssig und/oder kraftschlüssig und/oder zumindest teilweise stoffschlüssig mit dem Stahlrücken (28) zumindest im scheibenförmig verlaufenden Bereich (33) verbunden ist.

6. Seitenkanalverdichter (1) gemäß einem der Ansprüche 3 bis 5, **dadurch gekennzeichnet, dass** das Dichtelement (26) derart ausgeführt ist, dass die Dicht-Manschette (32) in einer ersten Stellung, insbesondere bei einem Stillstand des Seitenkanalverdichters (1), mit dem Lagerinnenring (22) derart in Kontakt steht, dass sich ein Kontaktpunkt (18) zwischen dem Lagerinnenring (22) und der Dicht-Manschette (32) ausbildet und/oder die Dicht-Manschette (32) mit einer ersten Anlagefläche (37) nicht mit einer zweiten Anlagefläche (38) des Stahlrückens (28) in Anlage steht, insbesondere im gekrümmten Bereich (35).

7. Seitenkanalverdichter (1) gemäß einem der Ansprüche 4 bis 6, **dadurch gekennzeichnet, dass** die Dicht-Manschette (32) im gekrümmten Bereich (35) derart verformbar ist, dass diese sich, insbesondere im Betrieb des Seitenkanalverdichters (1), mittels einer auf diese wirkenden resultierenden Kraft (41), die unter anderem eine Zentrifugalkraft aufweist, und/oder Druckkraft (45) derart vom Lagerinnenring (22) wegbewegt, so dass die Dicht-Manschette (32) mit ihrer ersten Anlagefläche (37) mit der zweiten Anlagefläche (38) des Stahlrückens (28) in Kontakt steht.

8. Seitenkanalverdichter (1) gemäß einem der Ansprüche 3, 4, 5 oder 7, **dadurch gekennzeichnet, dass** das Dichtelement (26) derart ausgeführt ist, dass die Dicht-Manschette (32) in einer zweiten Stellung, insbesondere im Betrieb des Seitenkanalverdichters (1), nicht mit dem Lagerinnenring (22) in Kontakt steht, so dass sich ein Spalt (10) zwischen dem Lagerinnenring (22) und der Dicht-Manschette (32) ausbildet.

9. Seitenkanalverdichter (1) gemäß einem der vorrangegangenen Ansprüche, **dadurch gekennzeichnet, dass** der zylindrischen Lagerzapfen (12) derart in Richtung der Drehachse (4) verläuft, dass seine Mantelfläche umlaufend um die Drehachse (4) verläuft und wobei das erste Lager (27) und/oder das zweite Lager (47) radial zur Drehachse (4) mit der Mantelfläche des Lagerzapfens (12) in Kontakt stehen.

10. Seitenkanalverdichter (1) gemäß einem der vorrangegangenen Ansprüche, **dadurch gekennzeichnet, dass** der Antrieb (6) als ein Axialfeld-Elektromotor (6) ausgeführt ist, der einen Stator (11) und einen Rotor (17) aufweist, wobei der Stator (11) und der Rotor (17) scheibenförmig umlaufend um die Drehachse (4) ausgebildet sind und wobei der Stator (11) in Richtung der Drehachse (4) neben dem Rotor (17) angeordnet ist.

11. Brennstoffzellensystem (31) mit einem Seitenkanalverdichter (1) nach einem der vorhergehenden Ansprüche 1 bis 10, wobei der Seitenkanalverdichter (1) in einem Anodenkreis des Brennstoffzellensystems (31) angeordnet ist.

## Claims

1. Side-channel compressor (1) for a fuel-cell system (31) for conveying and/or compressing a gaseous medium, in particular hydrogen, having a housing (3) and a drive (6), having a compressor chamber (30), which extends in the housing (3) in an encircling manner around an axis of rotation (4) and has at least one encircling side channel (19, 21), having a rotor chamber (44), which is situated in the housing (3), and a compressor impeller (2), which is situated in this and is arranged so as to be rotatable about the axis of rotation (4) and is driven by the drive (6), wherein the side-channel compressor (1) has at least one bearing (27, 47) which is situated on a cylindrical bearing journal (12), and wherein the respective bearing (27, 47) has a bearing outer ring (24), has a bearing inner ring (22) and has a bearing interior space (40) which is encapsulated from the rotor chamber (44) by means of at least one sealing element (26), **characterized in that** the bearing interior space (40) is able to be encapsulated from the rotor chamber (44) by the sealing element (26) in such a way that, according to the operating state of the side-channel compressor (1), either a rubbing seal or a non-contact seal is able to be produced between the bearing inner ring (22) and the sealing element (26).

2. Side-channel compressor (1) according to Claim 1, **characterized in that** the bearing outer ring (24) and the sealing element (26) are connected to the compressor impeller (2) in such a way that they are rotatable about the axis of rotation (4), in particular during operation of the side-channel compressor (1), wherein the bearing inner ring (22) is fixed in such a manner, in particular rotationally fixedly, on the bearing journal (12), and/or does not rotate along with the compressor impeller (2).

3. Side-channel compressor (1) according to Claim 1 or 2, **characterized in that** the respective sealing element (26) has a steel back (28) and a sealing sleeve (32), wherein the steel back (28) and/or the sealing sleeve (32) each have/has a disc-shaped region (33), which extends in an encircling manner, in particular at least almost orthogonally, around the axis of rotation (4), and a curved region (35).

4. Side-channel compressor (1) according to Claim 3, **characterized in that** the steel back (28) comprises a non-elastic material, in particular a metallic material, and the sealing sleeve (32) comprises an elastic material, in particular PTFE (polytetrafluoroethylene).

5. Side-channel compressor (1) according to Claim 3 or 4, **characterized in that** the sealing element (26) has an elastomer element (34) which at least partially comprises FKM (fluorinated rubber), wherein the re-formed sealing sleeve (32) is, by means of the elastomer element (34), connected in a form-fitting and/or force-fitting and/or at least partially materially bonded manner to the steel back (28) at least in the disc-shaped region (33).

6. Side-channel compressor (1) according to one of Claims 3 to 5, **characterized in that** the sealing element (26) is designed in such a way that the sealing sleeve (32), in a first position, in particular with the side-channel compressor (1) at a standstill, is in contact with the bearing inner ring (22) in such a way that a point of contact (18) is formed between the bearing inner ring (22) and the sealing sleeve (32) and/or the sealing sleeve (32) is not, by way of a first contact surface (37), in abutment with a second contact surface (38) of the steel back (28), in particular in the curved region (35).

7. Side-channel compressor (1) according to one of Claims 4 to 6, **characterized in that** the sealing sleeve (32), in the curved region (35), is deformable in such a way that, in particular during operation of the side-channel compressor (1), by means of a resultant force (41), comprising inter alia a centrifugal force, and/or pressure force (45) acting thereon, it moves away from the bearing inner ring (22) in such a way that the sealing sleeve (32) is, by way of its first contact surface (37), in contact with the second contact surface (38) of the steel back (28).

8. Side-channel compressor (1) according to one of Claims 3, 4, 5 and 7,
**characterized in that** the sealing element (26) is designed in such a way that the sealing sleeve (32), in a second position, in particular during operation of the side-channel compressor (1), is not in contact with the bearing inner ring (22), so that a gap (10) forms between the bearing inner ring (22) and the sealing sleeve (32).

9. Side-channel compressor (1) according to one of the preceding claims, **characterized in that** the cylindrical bearing journal (12) extends in the direction of the axis of rotation (4) in such a way that its lateral surface extends in an encircling manner around the axis of rotation (4), and wherein the first bearing (27) and/or the second bearing (47) are/is in contact with the lateral surface of the bearing journal (12) radially in relation to the axis of rotation (4).

10. Side-channel compressor (1) according to one of the preceding claims,
**characterized in that** the drive (6) is in the form of an axial-field electric motor (6) which has a stator (11) and a rotor (17), wherein the stator (11) and the rotor (17) are designed to extend in an encircling manner in the form of a disc around the axis of rotation (4), and wherein the stator (11) is arranged next to the rotor (17) in the direction of the axis of rotation (4).

11. Fuel-cell system (31) having a side-channel compressor (1) according to one of preceding Claims 1 to 10, wherein the side-channel compressor (1) is arranged in an anode circuit of the fuel-cell system (31).

## Revendications

1. Compresseur à canal latéral (1) pour un système de pile à combustible (31) destiné à l'acheminement et/ou à la compression d'un milieu gazeux, notamment d'hydrogène, avec un carter (3) et un entraînement (6), avec un espace de compression (30) s'étendant de manière périphérique autour d'un axe de rotation (4) dans le carter (3), lequel présente au moins un canal latéral périphérique (19, 21), avec un espace de rotor (44) se trouvant dans le carter (3) et une roue de compression (2) se trouvant dans celui-ci, laquelle est disposée de manière rotative autour de l'axe de rotation (4) et est entraînée par l'entraînement (6), le compresseur à canal latéral (1) présentant au moins un palier (27, 47) se trouvant sur un tourillon de palier cylindrique (12), et le palier respectif (27, 47) présentant une bague extérieure de palier (24), une bague intérieure de palier (22) et un espace intérieur de palier (40), lequel est encapsulé par rapport à l'espace de rotor (44) au moyen d'au moins un élément d'étanchéité (26), **caractérisé en ce que** l'espace intérieur de palier (40) est encapsulable par rapport à l'espace de rotor (44) par l'élément d'étanchéité (26) de telle sorte qu'en fonction de l'état de fonctionnement du compresseur à canal latéral (1), soit une étanchéité frottante, soit une étanchéité sans contact peut être réalisée entre la bague intérieure de palier (22) et l'élément d'étanchéité (26).

2. Compresseur à canal latéral (1) selon la revendication 1, **caractérisé en ce que** la bague extérieure de palier (24) et l'élément d'étanchéité (26) sont reliés à la roue de compression (2) de telle sorte que ceux-ci soient rotatifs autour de l'axe de rotation (4), notamment en fonctionnement du compresseur à canal latéral (1), la bague intérieure de palier (22) étant fixée de telle sorte, notamment de manière fixe en rotation sur le tourillon de palier (12), et/ou ne tournant pas conjointement avec la roue de compression (2).

3. Compresseur à canal latéral (1) selon la revendication 1 ou 2, **caractérisé en ce que** l'élément d'étanchéité respectif (26) présente un dos en acier (28) et une manchette d'étanchéité (32), le dos en acier (28) et/ou la manchette d'étanchéité (32) présentant chacun une zone en forme de disque (33) s'étendant autour de l'axe de rotation (4), notamment de manière au moins sensiblement orthogonale, et une zone courbée (35).

4. Compresseur à canal latéral (1) selon la revendication 3, **caractérisé en ce que** le dos en acier (28) présente un matériau non élastique, notamment un matériau métallique, et la manchette d'étanchéité (32) présente un matériau élastique, notamment du PTFE (polytétrafluoroéthylène).

5. Compresseur à canal latéral (1) selon la revendication 3 ou 4, **caractérisé en ce que** l'élément d'étanchéité (26) présente un élément élastomère (34) comportant au moins partiellement du FKM (fluorocaoutchouc), la manchette d'étanchéité formée (32) étant reliée au dos en acier (28), au moins dans la zone s'étendant en forme de disque (33), au moyen de l'élément élastomère (34), par complémentarité de forme et/ou par adhérence et/ou au moins partiellement par liaison de matière.

6. Compresseur à canal latéral (1) selon l'une quelconque des revendications 3 à 5, **caractérisé en ce que** l'élément d'étanchéité (26) est réalisé de telle sorte que la manchette d'étanchéité (32), dans une première position, notamment lors d'un arrêt du compresseur à canal latéral (1), est en contact avec la bague intérieure de palier (22) de telle manière qu'un point de contact (18) se forme entre la bague intérieure de palier (22) et la manchette d'étanchéité (32) et/ou la manchette d'étanchéité (32), avec une première surface d'appui (37), n'est pas en appui avec une deuxième surface d'appui (38) du dos en acier (28), notamment dans la zone courbée (35).

7. Compresseur à canal latéral (1) selon l'une quelconque des revendications 4 à 6, **caractérisé en ce que** la manchette d'étanchéité (32) est déformable, dans la zone courbée (35), de telle sorte que celle-ci s'éloigne, notamment en fonctionnement du compresseur à canal latéral (1), au moyen d'une force résultante (41) agissant sur celle-ci, laquelle comprend entre autres une force centrifuge, et/ou d'une force de pression (45), de la bague intérieure de palier (22), de sorte que la manchette d'étanchéité (32) est en contact, par sa première surface d'appui (37), avec la deuxième surface d'appui (38) du dos en acier (28).

8. Compresseur à canal latéral (1) selon l'une quelconque des revendications 3, 4, 5 ou 7, **caractérisé en ce que** l'élément d'étanchéité (26) est réalisé de telle sorte que la manchette d'étanchéité (32), dans une deuxième position, notamment en fonctionnement du compresseur à canal latéral (1), n'est pas en contact avec la bague intérieure de palier (22), de sorte qu'un interstice (10) se forme entre la bague intérieure de palier (22) et la manchette d'étanchéité (32).

9. Compresseur à canal latéral (1) selon l'une quelconque des revendications précédentes, **caractérisé en ce que** le tourillon de palier cylindrique (12) s'étend en direction de l'axe de rotation (4) de telle sorte que sa surface d'enveloppe s'étend de manière périphérique autour de l'axe de rotation (4), et dans lequel le premier palier (27) et/ou le deuxième palier (47) sont en contact radialement par rapport à l'axe de rotation (4) avec la surface d'enveloppe du tourillon de palier (12).

10. Compresseur à canal latéral (1) selon l'une quelconque des revendications précédentes, **caractérisé en ce que** l'entraînement (6) est réalisé en tant que moteur électrique à champ axial (6), lequel présente un stator (11) et un rotor (17), le stator (11) et le rotor (17) étant réalisés de manière périphérique en forme de disque autour de l'axe de rotation (4), et le stator (11) étant disposé, en direction de l'axe de rotation (4), à côté du rotor (17).

11. Système de pile à combustible (31) comprenant un compresseur à canal latéral (1) selon l'une quelconque des revendications 1 à 10 précédentes, le compresseur à canal latéral (1) étant disposé dans un circuit d'anode du système de pile à combustible (31).
